Europäisches Patentamt

European Patent Office

Office européen des brevets

(19)

(11) Publication number: **0 078 404 B1**

# EUROPEAN PATENT SPECIFICATION

(12)

(45) Date of publication of patent specification: **01.04.92**  (51) Int. Cl.5: **H01M 14/00**, H01G 9/04

(21) Application number: **82109061.0**

(22) Date of filing: **30.09.82**

The file contains technical information submitted after the application was filed and not included in this specification

(54) **Electric energy storage devices.**

(30) Priority: **29.10.81 US 316122**

(43) Date of publication of application:
**11.05.83 Bulletin 83/19**

(45) Publication of the grant of the patent:
**01.04.92 Bulletin 92/14**

(84) Designated Contracting States:
**AT BE CH DE FR GB IT LI LU NL SE**

(56) References cited:
**EP-A- 0 044 427        DE-A- 1 083 320**
**DE-A- 2 806 395        FR-A- 2 445 601**
**US-A- 3 105 178        US-A- 3 317 349**
**US-A- 3 879 108**

**JOURNAL OF THE ELECTROCHEMICAL SOCI-
ETY, vol. 127, no. 6, June 1980, pages
1342-1348, Princeton, US; G. BENI et al.:
"Electrochromism of anodic iridium oxide
films"**

**JOURNAL OF THE ELECTROCHEMICAL SOCI-
ETY, vol. 127, no. 2, February 1980, pages
272-277, Princeton, US; S. GOTTESFELD:
"The anodic rhodium oxide film: a two-color
electrochromic system"**

**JOURNAL OF APPLIED ELECTROCHEMISTRY,
vol. 11, no. 3, May 1981, pages 313-317, Chap-
man and Hall Ltd., Oxford, GB; N. VALVERDE:
"Analogue storage cells based on a coulo-
meter with solid electrolyte and
stoichiometric variation of the storage
phase. II. Cells with small temperature vari-
ation and low overvoltage"**

(73) Proprietor: **Craig, Dwight R.**
**7767 E. Ouaker Rd.**
**Orchard Park NY 14127(US)**

(72) Inventor: **Craig, Dwight R.**
**7767 E. Ouaker Rd.**
**Orchard Park NY 14127(US)**

(74) Representative: **Kraus, Walter, Dr. et al**
**Patentanwälte Kraus, Weisert & Partner**
**Thomas-Wimmer-Ring 15**
**W-8000 München 22(DE)**

EP 0 078 404 B1

## Description

The invention relates to an electrical energy storage battery in the form of a device comprising at least one rechargeable electrochemical cell.

Furthermore, the invention relates to an electrical capacitor in the form of an electrochemical device comprising at least one rechargeable electrochemical cell.

Moreover, the invention relates to the use of either of the above devices and to a process for storing electrical energy in these devices.

BACKGROUND OF THE INVENTION

The history of electrochemical energy storage devices, especially capacitors and batteries, has involved attempts to reduce the size, including both weight and volume, and to increase the electrical energy storage capacity while at the same time increasing the voltage required for dielectric breakdown. The occurrence under certain conditions of large electrochemical capacitance including pseudocapacitance is well established, but prior to this invention, no significant practical devices or applications having a high degree of "kinetic reversibility" have been made. Recent technological advances in capacitors have included aluminum electrolytic capacitors, tantalum capacitors, and ceramic among others, all of which are film-type capacitors. Recent advances in battery design have included improvement in life, efficiency and energy density by making available improved lead acid, nickel cadmium, nickel zinc, and various primary cells all of which are inherently over-voltage devices limited by electrode polarization.

The book "Electrodes of Conductive Metallic Oxides", edited by Sergio Trasatti and published by Elsevier Scientific Publishing Comp., Amsterdam - Oxford - New York, 1980, cites for example, mirror image voltammograms of iridium and ruthenium oxides. This work is of a laboratory nature and concentrates principally on the catalytic nature of these materials, which was the main interest at the time of publication of the book. As is usual with such experiments, the investigators were concerned only with one electrode in a cell, and that electrode was always driven by a suitable instrument (such as a potentiostat) rather than being allowed to respond freely to its environment, as would be required by a battery or capacitor in service.

Further publications of interest are the article "Electrochromism of Anodic Iridium Oxide Films" of G. Beni, C. E. Rice and J. L. Shay in the "Journal of the Electrochemical Society", Vol. 127, No. 6, June 1980, pages 1342 to 1348, and the article "The Anodic Rhodium Oxide Film: a Two-Color Electrochomic System" of S. Gottesfeld in the "Journal of the Electrochemical Society", Vol. 127. No. 2, February 1980, pages 272 to 277, which articles disclose voltamograms of various types.

However, although many of the electrochemical energy storage devices of the types mentioned above at the beginning of this section, "BACKGROUND OF THE INVENTION", and embracing the recent technological advances, have filled a need, there continues to be a requirement for efficient high power density devices which withstand the rigors of continuous use and virtually unlimited cycling in electrical circuits. This invention provides such a device which shall be referred to herein as an electrical energy storage battery or an electrical capacitor or also as a supercapacitor.

According to a first aspect of the present invention there is provided an electrical energy storage battery in the form of a device comprising at least one rechargeable electrochemical cell;

said at least one electrochemical cell comprising at least two electrodes, at least one electrolyte and a container therefor;

at least one of said electrodes having a surface comprising an active electrochemical material having a voltammogram resulting from electron transfer between said active electrochemical material and said at least one electrolyte whose charge/discharge curve trace sections are in substantially "mirror image" form;

said battery being enclosed in a container and capable of showing a mirror image voltamogram in its range of operation.

According to a second aspect of the present invention there is provided an electrical capacitor in the form of an electrochemical device comprising at least one rechargeable electrochemical cell;

said at least one electrochemical cell comprising at least two electrodes, at least one electrolyte and a container therefor;

at least one of said electrodes having a surface comprising an active electrochemical material having a voltammogram resulting from electron transfer between said active electrochemical material and said at least one electrolyte whose charge/discharge curve trace sections are in substantially "mirror image" form;

said capacitor being enclosed in a container and capable of showing a mirror image voltammogram in its range of operation.

According to a third aspect, the present invention provides the use of either of the devices of the invention in capacitor-type devices, battery-type devices, passive negative differential resistance devices; passive frequency conversion devices; frequency multiplier devices; electrochromic devices; data processing memories; gaseous, liquid and solid material separation devices and systems; and passive devices exhibiting constant reactance versus frequency.

According to a fourth aspect, the present invention provides a process for storing electrical energy in the devices of the invention.

Thus, the invention provides a novel type of electrochemical device such as a capacitor or a battery and more particularly the practical use of an electrochemical system exhibiting a high degree of pseudocapacitance, "kinetic reversiblity", and/or "coulombic reversibility", with which is sometimes associated a capacitance, among other characteristics, arising from the passage of charge that accompanies the change of potential of a suitable electrode. The devices of this invention also permit taking advantage of the energy storage capacity formed by a pair of spaced electrodes immersed in an ionized electrolyte (that is, double-layer capacitance and the geometric dielectric capacitance).

The Supercapacitor is an electrochemical cell or combination of cells comprising two electrodes, an electrolyte, and a container therefore, wherein the electrodes are composed of one or more of the following materials: the oxides of ruthenium, tantalum, rhodium, iridium, cobalt, nickel, molybdenum, tungsten, and vanadium, the sulfides of iron and lead, and their metals and their sulfides, hydrides, nitrides, phosphides, and selenides, and mixtures thereof; and wherein the electrolyte may be acidic or basic or neutral, aqueous or nonaqueous, such as sulfuric acid or potassium hydroxide or sodium sulfate; and wherein a suitable container is used to house the preceeding components. In addition, the Supercapacitor may advantageously employ a separator between the electrodes. Ion permeable membranes, hydrophilic plastic films, glass, paper, felt, and cellulosics are all suitable depending on the particular application and device. Current collector grids or meshes may be employed in the electrode assembly if desired.

The Supercapacitor is an electrochemical cell or combination of cells characterized by 1) the formation and/or reactivity of an electrodeposited layer or layers on one or more electrodes, and/or by 2) the type of reaction occurring between electrode and electrolyte, and/or by 3) the separation of charges across double layers. These characteristic processes occur in a potential range throughout which no continuous reaction occurs of an electrode or electrolyte in the system. They give rise to one or more of a multiplicity of phenomena including, but not limited to, pseudocapacitance, "kinetic reversiblity," "coulombic reversibility," distinguishable energy states of electrodeposited species on surfaces, creation of surface layers, electrochromic effects, negative differential resistance, and frequency multiplying effects. These characteristic processes are useable in many ways, some of which will be described in more detail hereinafter and in the examples and description of the drawings.

A large family of devices is conceived which employ these basic characteristic processes. Examples of these are electronic-capacitor-like devices; battery-type devices; passive negative differential resistance devices; passive frequency conversion devices; electrochromic devices; data processing memories; gaseous, liquid, and solid material separation devices and systems; and passive devices exhibiting constant reactance versus frequency, which devices may utilize one or more of the characteristics described in the previous paragraph.

The electrochemical cells used for these applications may be produced in various forms, such as plane electrode cells; "jelly-roll" cells; porous electrode cells; slurry systems; fluidized-bed electrodes; endless belt electrodes; transparent or opaque electrodes and housings; liquid, solid, or gaseous electrolytes; etc., depending on the nature of the device. Furthermore, in several of the foregoing devices of this invention which take advantage of the electrodeposition or reaction that occurs at under-potential, I have found that the elements of the metals disclosed may be used as electrodes. For example, in data processing memory device applications, metals such as platinum, gold, or iridium might be preferred electrode materials because they exhibit a one-to-one relationship between the metal adsorbent atoms and the hydrogen (or other) electrodeposited atoms, thereby allowing for a memory density approaching the surface density of metal atoms in the surface (which is on the order of $10^{15}$ per square centimeter). Also, in solid material separation devices such as in the separation of metallic lead, the lead can be electrodeposited from aqueous solution (lead chloride) onto a metallic substrate electrode, preferably gold, such electrodeposition of lead being preferential to other ions and reversible with respect to voltage on this electrode, thereby permitting separation or refining of lead with the use of minimal amounts of electrical energy.

DESCRIPTION OF DRAWINGS

Figure 1 is a voltammogram showing oxygen and hydrogen electroadsorption and electrodesorption on platinum surfaces at potentials less than those required for gas evolution.

Figure 2 is a voltammogram in aqueous solution of ruthenium oxide, an electrode material preferably employed in this invention.

Figure 3 is a voltammogram in aqueous solution of a mixture of ruthenium and tantalum oxides which is a mixed metal oxide electrode material also advantageously employed in this invention.

Figure 4 is still another voltammogram in aqueous solution of another material, namely, molybdenum oxide, which is also employed in certain devices of this invention.

Figure 5 is a voltammogram of tungsten oxide in aqueous solution.

Figure 6 is a voltammogram of nickel oxide in aqueous solution.

Figure 7 is a monopolar parallel plate structure capacitor in accordance with this invention.

Figure 8 is a monopolar "jelly-roll" structure capacitor in accordance with this invention.

Figure 9 is a more detailed view of the basic structure of the capacitor of this invention which is a preferred embodiment.

Figure 10 is a diagrammatic sketch of a battery of this invention.

## DETAILED DESCRIPTION OF THE INVENTION

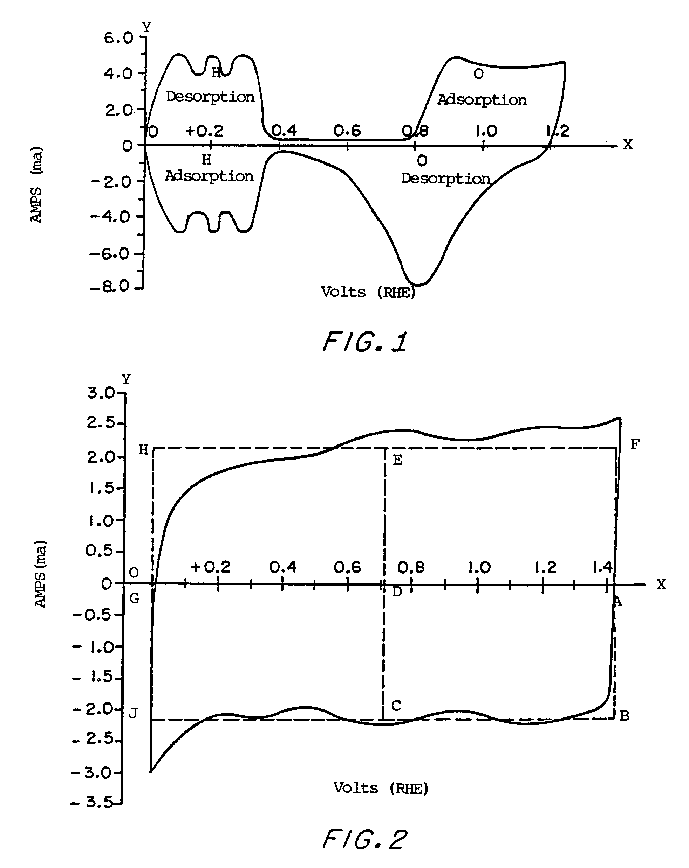

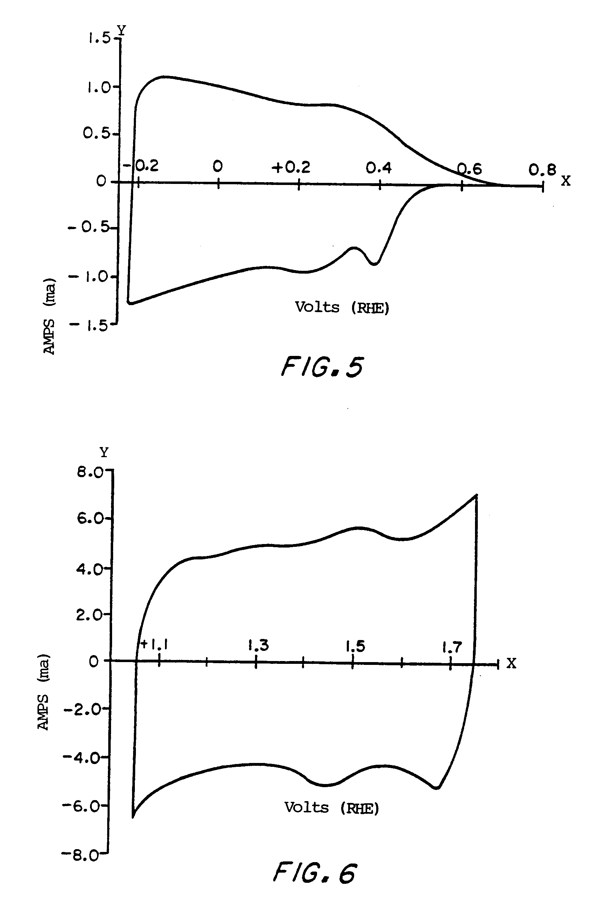

The phenomena which are so novelly employed in the devices of this invention are the result of certain reactions which occur in some electrochemical cells. An example of pseudocapacitance occurs in the deposition and ionization of hydrogen and oxygen on platinum surfaces at potentials less than those required for gas evolution. The voltammograms of Figures 1 through 6 were obtained by use of the procedure described generally in Modern Electrochemistry by Bockris and Reddy on page 1316.

Figure 1 (not an actual voltammogram) depicts oxygen electroadsorption, oxygen electrodesorption, hydrogen electroadsorption, and hydrogen electrodesorption.

The area between the curve and the x-axis represents the charge delivered to or accepted from the electrode ($Q = i\int dt$). In this case, as the voltage is cycled, the electrode is alternately charged and discharged, first as hydrogen is electroadsorbed and electrodesorbed, then as oxygen is electroadsorbed and electrodesorbed. The name given to the charge/discharge phenomenon is "pseudocapacitance," since it behaves like a capacitance, but the storage of charge involves a Faradaic process, rather than an electrostatic one. Electrochemistry literature tells us that this pseudocapacitance is not a real capacitance, since it will not hold a charge, but this invention makes use of it as a storage means. (See Bockris and Reddy, Modern Electrochemistry, P. 1027.)

In the case referred to above (Figure 1), the coulombic charge ($Q = i\int dt$) during electroadsorption in the oxygen region is substantially the same as the coulombic discharge during electrodesorption. The same is true for the hydrogen region, taken separately from the oxygen and, of course, for the total reaction, taken over the voltage range 0 to approximately 1.3 volts RHE. This balance of coulombic charge and coulombic discharge shall be referred to herein as "coulombic reversibility."

In Figure 1, the electroadsorption and electrodesorption of oxygen occur at different voltages, and their current traces are of different shapes. The electroadsorption and electrodesorption of hydrogen, on the other hand, occur at approximately the same voltage and produce curves that are approximate "mirror images." Figure 2 is a voltammogram of a preferred electrode material of this invention, i.e., ruthenium oxide. From Figure 2 it can be seen that all sections of the curve show approximate "mirror images" with respect to the voltage axis. Representative "mirror images" in this context are shown in Figures 2 through 6. This "mirror image" phenomenon shall be referred to herein as "kinetic reversibility" while the non-"mirror image" such as the oxygen electroadsorption-desorption in Figure 1 shall be referred to as "kinetic nonreversibility" or partial reversibility. Systems that are "kinetically reversible" show very high electrical efficiency, since they return charge at the same voltage at which they receive it. Systems that are "kinetically nonreversible" are less efficient, since they are charged at a different voltage than that at which they are discharged.

Referring again to Figure 1, in the hydrogen region we see three current peaks between the voltages of 0.4 and 0.0 RHE, corresponding, it is believed, to the electroadsorption and electrodesorption of hydrogen at (probably) different sites on the platinum surface. We also see less-well-defined peaks in the oxygen region where it is believed that oxygen is similarly adsorbed and desorbed. Coincident with these reactions is observed a change of entropy and a heat of adsorption or desorption of the hydrogen and oxygen and of other species which may occupy the site, such as organic impurities or water molecules. Thus there are in these reactions distinguishable energy states of various electrodeposited species on the surfaces of the substrates.

Further to analyses relating to Figure 1, it is now believed that the electrosorption of hydrogen on platinum produces a surface monolayer of hydrogen, while the electrosorption of oxygen can produce multiple surface layers of oxygen or oxide.

In the creation of some surface layers, such as oxides on ruthenium, under the proper conditions, we observe a change in the optical appearance or reflectivity of the surface.

Referring once more to Figure 1, we observe that, for example, the portion of the hydrogen desorption curve at about 0.35 volts RHE shows a reduction of current with an increase in voltage. This represents a negative differential resistance characteristic which occurs in the systems of this invention. Also, the area at 0.0 to 0.4 volts RHE shows three cycles of current for one-half cycle of voltage, which frequency-multiplying characteristic occurs in the systems of this invention.

The unique characteristics exhibited in the systems of this invention, including "kinetic reversibility," "coulombic reversibility," distinguishable energy states of electrodeposition, creation of surface areas, electrochromic effects, negative differential resistance, and frequency multiplying effects are employed in the electrical energy devices referred to herein.

In order for this invention to be more readily understood and to describe the many variations that may be employed in each of the components, this invention will now be detailed using a capacitor as an example; however, this is not to be construed as limiting this invention.

## THE ELECTRODE

The electrodes of this invention, their composition, preparation, and assembly in the Supercapacitor devices of this invention are critical to obtaining the superior performance in electrical and physical characteristics of the devices to be exemplified hereinafter. I have found that in order to maximize the reduction in size, including volume and weight ratios, to the energy storage capacity and to optimize the combined effects of pseudocapacitance, double-layer capacitance and "kinetic reversibility," it is desirable to employ an electrode material having a voltammogram of substantially symmetrical current traces in the oxidation and reduction cycles. Materials that may advantageously be employed are ruthenium oxides and mixtures of ruthenium with tantalum and/or iridium, preferably a 50-50 mole percent $RuTaO_x$ or such a mixture with amounts of iridium such as $Ru_{0.5}Ir_{0.25}Ta_{0.25}O_x$. Other electrode materials such as previously described may be employed, it being preferable that their voltammograms show substantial "kinetic reversibility" such as that shown in Figures 2, 3, 4, 5, or 6.

When employing ruthenium as the electrode material, the ruthenium content may be varied over wide ranges as shown when mixed with, for example, tantalum, or iridium. The following data in Table I illustrates a measured variation in capacitance per unit geometric area against mole percent of ruthenium in the electrode material when mixed with tantalum.

TABLE I

| Capacitance Versus Composition | |
| --- | --- |
| Mole % $RuO_2$ in $Ta_2O_5$ | Capacitance ($F/cm^2$) |
| 20 | 0.045 |
| 25 | 0.1 |
| 40 | 2.0 |
| 50 | 2.8 |
| 60 | 1.6 |
| 75 | 0.8 |

The porosity of the electrode is another factor that contributes to optimization of results for devices of this invention. In general, porosity is desirable in order to maximize the energy storage density, or capacitance per unit volume. However, proper control of the porosity will also allow control of the internal resistance and of the reaction rate (by controlling the access time of the electrolyte to the electrode), thus providing a measure of control over the capacitance versus frequency characteristic. This can be controlled to the extent of providing capacitance which varies inversely with frequency, thus allowing production of a constant reactance device, as mentioned hereinbefore.

The thickness of the oxide coating is still another factor that affects the performance and characteristics of the Supercapacitors of this invention. Generally, the capacitance varies with the thickness of the ruthenium oxide coating so that by varying the thickness of the coating, the capacitance per unit area may be controlled. Using the thermal oxidation technique (see H. B. Beer, South African Patent 662.667 (1966) and 680.034 (1968)) a thick and uniform ruthenium oxide formation was obtained. This coating was tenacious and further did not exhibit any flaking or other undesirable characteristics.

In addition, I have found that the purity of the metals or metal compounds used in the preparation of the electrodes can have a significant effect on the performance of the device. For example, it is obvious that the wrong type of metallic impurity in a capacitor or other device using a metal electrode would produce a galvanic corrosive action which would deteriorate the electrode and probably increase the leakage current of the device. In general, I prefer a purity of 99 percent or better, but certain systems can tolerate high percentages of impurities without detrimental effect. In some cases, additives can even be beneficial, as in the case of, e.g., tantalum oxide addition to ruthenium oxide (see Table I). In this case, addition of 50 percent tantalum oxide maximized the specific capacitance of the device.

Various processes and techniques may be employed in the preparation of the electrode. Among those methods which I have found satisfactory are: thermal preparation of the selected material, e.g., ruthenium-tantalum mixed oxides; electrochemically generated ruthenium oxide; and pressed pellet electrode preparation, including the use of binders, e.g., teflon powder, if desired. Other methods of preparing a ruthenium oxide electrode may be employed, for example, precursor or impregnation techniques. In the examples which follow, specific details will be given concerning the preparation of electrodes in connection with the data obtained in specific experiments and with preferred embodiments of this invention.

## THE ELECTROLYTES

The electrolytes which may be used in the Supercapacitor of this invention may be acidic, alkaline, or neutral, aqueous or nonaqueous. I have used, successfully, electrolytes varying in pH from (-) 1 to (+) 14, taking into account, of course, the chemical stability of the electrode in the electrolyte. pH affects the specific capacitance of the device, with the amount varying with the electrode and with the electrolyte. Examples of electrolytes employed are: NaOH, $H_2SO_4$, KOH, HCl, $NaClO_3$, $Na_2SO_4$, and $K_2SO_4$. Solid or gaseous electrolytes may, of course, also be used provided the active ions are compatible with the electrode adsorption or reaction process.

## THE CONTAINER AND ASSEMBLY OF THE SUPERCAPACITOR

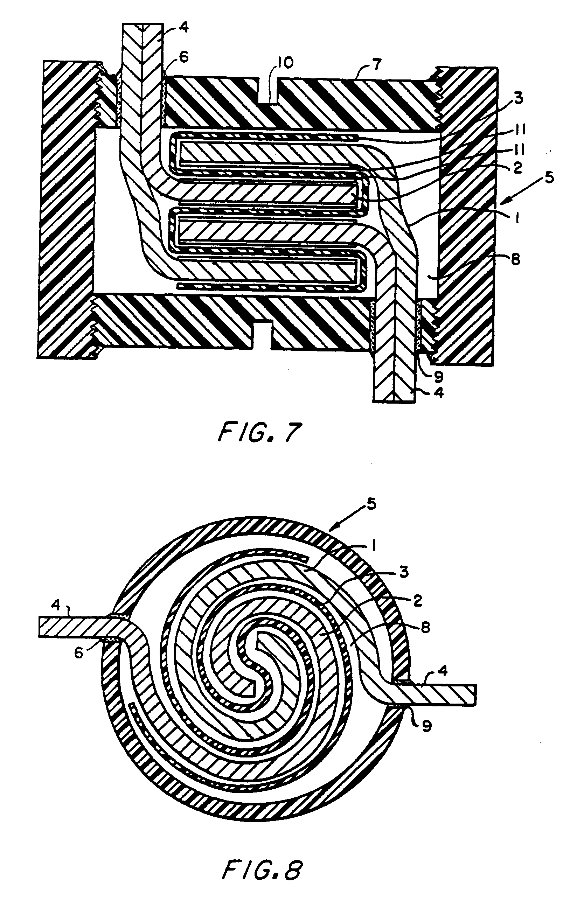

Figure 7 illustrates one of many possible configurations of a monopolar type of capacitor that can be made using concepts described in this invention. Electrodes, of various sizes and shapes, may be used, having been previously coated with active materials such as ruthenium oxide. These electrodes are provided with conductive tabs for current conduction to and from the electrodes. The electrodes are then stacked, alternating electrode 1 which may be positive and electrode 2 which is negative and using a suitable separator 3 to prevent shorting of electrodes 1 and 2 . The lead tabs 4 are brought outside the casing 5 through a suitable hole 6 in the end cap 7 , and tabs 4 from the multiple electrodes 1 and 2 may be gathered together by welding. After insertion of the electrolyte 8 , the assembly may then be drawn lightly together by use of a turnbuckle-type of casing 5 and recesses 10 . Electrolyte leakage may be prevented by the use of a suitable sealant 9 . This assembly may be hooked up in a plurality of units to produce a capacitor of any given capacity.

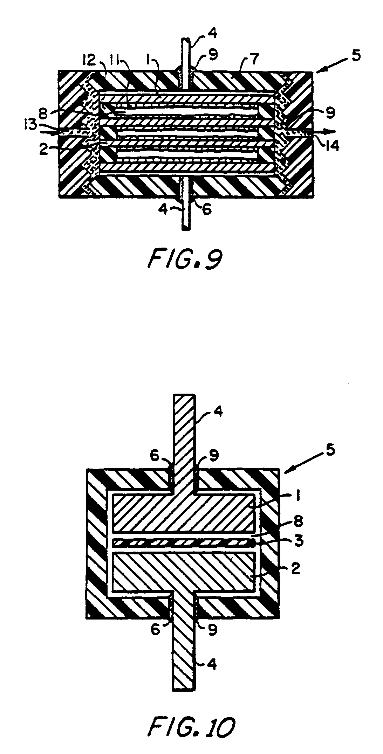

Figure 8 represents another possible configuration of a monopolar type of capacitor, popularly termed a "jelly-roll" type. Here two electrodes 1, and 2 , coated with an appropriate active material such as ruthenium oxide (not shown) are prevented from shorting by interleaving a suitable separator 3 , and are rolled up in "jelly-roll" fashion as shown. Tabs 4 are extended from each of the electrodes through the casing 5 , and after insertion of a suitable electrolyte 8 , the holes 6 are plugged with a suitable sealant 9 .

The Supercapacitors of this invention have much larger capacitance per unit volume than aluminum electrolytic capacitors. For example, an experimental capacitor produced in accordance with this invention and of the design shown in Figure 9 of 6 volts and 10,000 ufd was 1/10 the physical size of a standard commercial aluminum electrolyte capacitor of the same voltage and capacitance. Another model of the same design yielded 1/30 the physical size of the commercial capacitor. To achieve the high energy density capacitor (small volume and light weight) it is preferable to optimize not only the electrode material, the electrolyte, and the separators, when used, but also the physical configuration, stacking, end terminals, and the container or case, thereby permitting improvement in physical size.

Figures 7, 8, and 9 illustrate various configurations for capacitors of this invention. In the Supercapacitor shown in Figure 9, the electrodes 1 and 2 are 0,254 mm (10 mil.) thick substrate titanium coated with $RuTaO_x$ and the spacergaskets 11 are 0,381 mm (15 mil.) thick Viton. This is pressure sealed, preventing electrolyte leakage and shunt current losses. The case sealant 9 is electrolyte resistant compound such as epoxy resin coated over the assembled stack. The case cylinder 5 may be a plastic such as Kovar, polyethylene, or polypropylene. The end caps 7 are copper and the wires are spot welded to the two end electrodes 1 and 2 .

The assembly procedure comprises stacking (a) the oxide coated electrodes which are oxide free on their edges so that they will seal when assembled, (b) the end electrodes which are oxide coated on one side and which have their lead wires spot welded, and (c) the Viton gaskets. The stack so formed is immersed in the electrolyte under vacuum. The stack is removed from the electrolyte pressure sealed. The stack is then coated with insulator compound such as epoxy resin by forcing the resin through the opening 13 and out through the exit 14 .

The concept of this invention may be employed, for example, in batteries for use in powering pacemakers for implantation in humans where regulation of heartbeat is required. Since this battery is electrically rechargeable, it would be recharged by inductance from outside the body, thus permitting recharging without removal from the body. (Present batteries for this use are not rechargeable electrically and must be replaced about every five to seven years by a surgical process.) Further, this recharging would be done at periods shorter than the above-mentioned five to seven years, allowing much smaller batteries to be used. Further, with batteries of this invention, extremely long life and a very great number of cycles can be realized, thus eliminating the need for any further surgery, once the initial implantation is accomplished. This battery is particularly well suited to the application because of its small size, its long cycle life, and its rechargeability.

In another application, this battery would be used for utility load-levelling by charging a great number of cells (connected in a suitable series-parallel arrangement) at night over, say, a ten-hour period when the load demand in a utility power-generation station is low. These batteries would then be discharged at the peak load demand hours of the day, thus allowing a relatively constant power-generation level to be used by the utility. Other advantages also derive from this practice and are well-known to those acquainted with load-levelling technology. This battery is particularly well-suited to this technology because of its high charge-to-discharge efficiency and its very long cycle life.

Figure 10 illustrates a typical one-cell battery of this invention. Electrodes 1 and 2 are, in this case, porous slugs of ruthenium oxide powder, prevented from shorting one to the other by a suitable separator, and enclosed in a casing (in this case made of an insulating material, although the electrode and leads could easily be insulated from the casing if the casing were made of metal or other conductive material). Either electrode can be considered as the positive electrode with this design, and the battery can be charged alternately in one polarity and then in the opposite polarity without damage.

A list of characteristics of the battery of this invention is given below:

1. A very high round trip (charge-discharge) efficiency
2. Very long life
3. Very great cycle life
4. High power density
5. Very high charge and discharge rates
6. Capacity substantially invariant with high discharge rates
7. Shallow and deep discharge capability without affecting lifetimes
8. Reasonable energy density
9. Electrically rechargeable (secondary type)
10. Simple construction, black box type

Table II gives the performance characteristics of Supercapacitors made as described above. The following examples are given to further illustrate this invention; however, they are not intended to limit the scope thereof.

## TABLE II

| | Example I | Example II |
|---|---|---|
| Device Type | Capacitor | Capacitor |
| Electrode | | |
| a. Form | Thermally formed | Pellet |
| b. Composition | $TaRuO_x$ | $RuO_2$ |
| Electrolyte | $3.5 \ M \ H_2SO_4$ | $3.5 \ M \ H_2SO_4$ |
| Polarity | Bipolar/Nonpolar | Single Cell/Nonpolar |
| Volume | $5.0 \ cm^3$ | $0.5 \ cm^3$ (appr.) |
| Capacitance | 10,000 ufd | 65 Fd |
| Tolerance | $\pm$ 10% | $\pm$ 5% |
| Voltage | 6 V | 1 V |
| ESR | 80 m$\Omega$ | |
| Assembly | See Figure 9* | See Figure 10 |
| a. | 0,254 mm (10 mil.) gaskets | Separator |
| b. | 0,0254 mm (1 mil.) Ti substrates | |
| c. | Screw assembly | |

*Figure 9 shows a 3 volt capacitor of similar construction.

### THE ELECTRICAL AND OPERATING CHARACTERISTICS OF DEVICES OF THIS INVENTION

The electrical characteristics of the rechargeable electrochemical cells of this invention are more readily understood by reference to the drawings in Figures 2 through 6 which show voltammograms of various electrode/electrolyte combinations or systems embraced within this invention. Once the device has been charged by applying a voltage to its terminals and the device is disconnected from its voltage source, no current will be flowing and the voltage of the positive electrode will be at the high voltage end of the curve as shown in Figure 2 (point A). When applying an electrical load across the terminals, current flows and traces the path of the curve in the lower section below the horizontal axis along the path A, B, C, D, until the electrode is fully discharged which is shown at point D.

When charging the device, the current for the positive electrode traces the curve in the upper section above the axis along the path D, E, F, A. The other electrode has substantially the same electrical characteristics, which can be depicted in a similar manner, except that the current flow is the opposite, that is, discharging along path G, H, E, D and charging along path D, C, J, G. Thus the devices of this invention possess the unique feature of maximizing the use of "kinetic reversibility." This is also shown by Figure 2 because the amount of current flowing during charge of the device is substantially the same, but of opposite sign, as the current flowing during discharge of the device at the same potential. This is especially true for those systems having curves in the charge/discharge cycle which have the forms of closed "mirror images." The ideal system for an electronic capacitor is depicted as the broken line rectangle for Figure 2 for the electrode/electrolyte system described. It can readily be seen that the actual curve closely approximates the ideal.

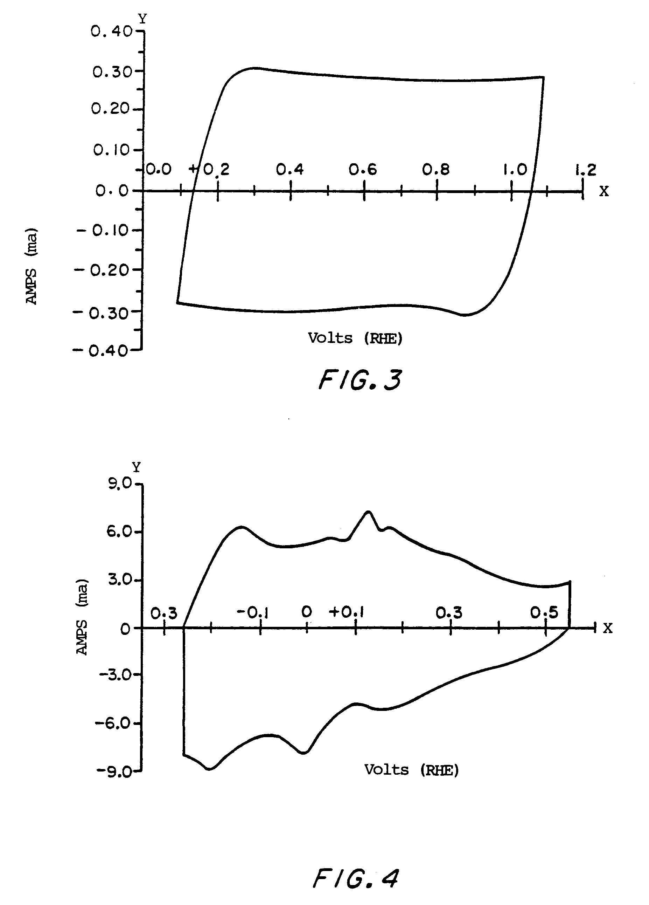

The devices of this invention which employ "kinetic reversibility," have the additional advantage that the capacitance of an electronic capacitor (or the capacity of a battery) can be controlled by the electrical or photoactive bias (e.g., D.C. working voltage level) impressed on the device. For example, in referring to Figure 4, the instantaneous capacitance depends on the height of the curve above the x-axis at the instantaneous voltage. Since this height varies with the position along the x-axis, it can be seen that the capacitance can be controlled by operating the device at a higher or lower voltage. This voltage level can be effected by the use of any of a number of features such as multiple electrodes or electrodes of different effective reactivity (for example, different volumes or surface areas).

The electrochemical reactions that take place in the metals from the materials of this invention are not fully known, however, some of the electrode materials known to be capable of existing in a plurality of oxidation states such as the oxides of ruthenium, tungsten, molybdenum, and cobalt are among those which are preferred for capacitor devices. It is important in operating the devices of this invention not to apply a voltage across its terminals that causes continuous reaction of the electrolyte and to keep it below the range where there is any significant amount of evolution of oxygen or hydrogen at the electrodes or dissolution of the electrodes themselves.

Although my invention has been described with respect to specific examples, illustrations, and certain preferred embodiments thereof, I do not intend that my invention should be thereby construed as being limited in scope except as expressly defined in the appended claims.

## Claims

1. An electrical energy storage battery in the form of a device comprising at least one rechargeable electrochemical cell;

   said at least one electrochemical cell comprising at least two electrodes (1, 2), at least one electrolyte (8) and a container (5) therefor;

   at least one of said electrodes (1, 2) having a surface comprising an active electrochemical material having a voltammogram resulting from electron transfer between said active electrochemical material and said at least one electrolyte (8) whose charge/discharge curve trace sections are in substantially "mirror image" form;

   said battery being enclosed in a container (5) and capable of showing a mirror image voltammogram in its range of operation.

2. An electrical capacitor in the form of an electrochemical device comprising at least one rechargeable electrochemical cell;

   said at least one electrochemical cell comprising at least two electrodes (1, 2), at least one electrolyte (8) and a container (5) therefor;

   at least one of said electrodes (1, 2) having a surface comprising an active electrochemical material having a voltammogram resulting from electron transfer between said active material and said at least one electrolyte (8) whose charge/discharge curve trace sections are in substantially "mirror image" form;

   said capacitor being enclosed in a container (5) and capable of showing a mirror image voltammogram in its range of operation.

3. The device according to claim 1 or 2, characterized in that said voltammogram results from electron

EP 0 078 404 B1

transfer in a substantially surface reaction between said active electrochemical material and said electrolyte (8).

4. The device according to claim 1, 2 or 3 characterized in that at least two of said electrodes (1, 2) have a surface comprising said active electrochemical material(s).

5. An electrical energy storage device in accordance with anyone of claims 1 to 4, characterized in that said active electrochemical material is a metal, a metal compound, or a mixture of metals and/or compounds.

6. An electrical energy storage device in accordance with anyone of claims 1 to 4, characterized in that said active electrochemical material is a metal, a metal compound or a mixture of metals and/or compounds devoid of impurities which produce galvanic corrosive action that deteriorates said electrodes (1, 2).

7. An electrical energy storage device in accordance with anyone of claims 1 to 4, characterized in that said active electrochemical material is composed of an oxide or a mixture of oxides of the same or different metals.

8. An electrical energy storage device in accordance with anyone of claims 1 to 4, characterized in that said active electrochemical material includes a material selected from the group consisting of the oxides of ruthenium, rhodium, tantalum, cobalt, iridium, molybdenum, nickel, vanadium, and tungsten, their metals, sulfides, hydrides, nitrides, phosphides, selenides, the sulfides of iron and lead, and mixtures thereof.

9. An electrical energy storage device in accordance with anyone of claims 1 to 4, 7 and 8, characterized in that said electrochemical material is a mixed oxide of ruthenium with tantalum and/or iridium.

10. An electrical energy storage device in accordance with anyone of claims 1 to 9, characterized in that both electrodes (1, 2) have their active electrochemical materials composed of the same substance.

11. An electrical energy storage device in accordance with anyone of claims 1 to 10, characterized in that said active electrochemical material is coated on the electrode (1, 2).

12. An electrical energy storage device in accordance with anyone of claims 1 to 11, characterized in that said electrolyte (8) is a liquid, a solid or a gaseous electrolyte (8).

13. An electrical energy storage device in accordance with claim 12, characterized in that said liquid electrolyte (8) is an acid, a base or neutral electrolyte, aqueous or non-aqueous.

14. An electrical energy storage device in accordance with claim 13, characterized in that said liquid electrolyte (8) is NaOH, $H_2SO_4$, KOH, HCl, $NaClO_3$, $Na_2SO_4$ or $K_2SO_4$, or generally an aqueous neutral salt.

15. An electrical energy storage device in accordance with anyone of claims 1 to 14, characterized in that said electrodes (1, 2) are separated by a separator (3).

16. An electrical energy storage device in accordance with claim 15, characterized in that said separator (3) is selected from the group consisting of ion permeable membranes, hydrophilic plastic films, glass, paper, felt and cellulosic material.

17. An electrical energy storage device in accordance with anyone of claims 1 to 16, characterized in that current collector grids or meshes are employed in the electrodes (1, 2).

18. A device in accordance with anyone of claims 1 to 17, characterized in that said active electrochemical material is pseudocapacitive.

19. A device in accordance with anyone of claims 1 to 18, characterized in that said active electrochemical

10

material is kinetically reversible.

20. An electrical negative differential resistance device characterized by the limitations of anyone of claims 1 to 19.

21. An electrical frequency conversion device characterized by the limitations of anyone of claims 1 to 19.

22. An electrical frequency multiplying device characterized by the limitations of anyone of claims 1 to 19.

23. A computer memory device characterized by the limitations of anyone of claims 1 to 19.

24. An electrical device characterized by the limitations of anyone of claims 1 to 23, wherein a specific material or materials are adsorbed in a limited voltage range.

25. An electrical device characterized by the limitations of anyone of claims 1 to 24, wherein the porosity of the electrode (1, 2) is selected to produce a reactance which is substantially constant over a selected frequency range.

26. A device according to anyone of claims 1 to 25, characterized in that said active material is a coating on an underlying electrode (1, 2).

27. An electrical device characterized by the limitations of anyone of claims 1 to 26, wherein the active material, provided as metal(s) or metal compound(s) has a purity of 99% or better.

28. Use of either of the devices according to anyone of the preceding claims in capacitor-type devices, battery-type devices, passive negative differential resistance devices; passive frequency conversion devices; frequency multiplier devices; electrochromic devices; data processing memories; gaseous, liquid, and solid material separation devices and systems; and passive devices exhibiting constant reactance versus frequency.

29. A process for storing electrical energy in the devices of anyone of the preceding claims.

30. The process in accordance with claim 29, characterized by comprising;
    (a) charging the device by introducing an electrical current through the electrodes (1, 2),
    (b) maintaining the potential on the device below the continuous reaction voltage of the system employed, until the desired charge is obtained,
    (c) discharging the stored electrical energy in the system designed for the desired application or use of the electricity.

31. The process in accordance with claim 30, characterized by comprising repeating the charge cycle after discharge in order to recharge the device for its continuous or subsequent use.

32. The process in accordance with claim 30 or 31, characterized in that the voltammogram has a "mirror image" charge/discharge trace of substantially varying height at different voltages, and the device is operated at different voltage levels to control the electric energy storage capacity.

**Revendications**

1. Batterie d'accumulation d'énergie électrique sous forme d'un dispositif comprenant au moins un accumulateur électrochimique,
    l'accumulateur électrochimique au moins comprenant au moins deux électrodes (1, 2), au moins un électrolyte (8) et un récipient (5) destiné à les contenir,
    l'une au moins des électrodes (1, 2) ayant une surface comprenant un matériau électrochimique actif ayant un enregistrement voltamétrique résultant du transfert d'électrons entre le matériau électrochimique actif et au moins un électrolyte (8) dont les parties de courbe de charge-décharge sont sous forme pratiquement d'images spéculaires,
    la batterie étant enfermée dans un récipient (5) et pouvant donner un enregistrement voltamétrique sous forme d'une image spéculaire dans sa plage de fonctionnement.

**2.** Condensateur électrique sous forme d'un dispositif électrochimique ayant au moins un accumulateur électrochimique,

l'accumulateur électrochimique au moins comprenant au moins deux électrodes (1, 2), au moins un électrolyte (8) et un récipient (5) destiné à les contenir,

l'une au moins des électrodes (1, 2) ayant une surface comprenant un matériau électrochimique actif ayant un enregistrement voltamétrique résultant du transfert d'électrons entre le matériau actif et un électrolyte au moins (8) dont les parties de courbe de charge-décharge sont pratiquement sous forme d'images spéculaires,

le condensateur étant enfermé dans un récipient (5) et pouvant donner un enregistrement voltamétrique à image spéculaire dans sa plage de fonctionnement.

**3.** Dispositif selon la revendication 1 ou 2, caractérisé en ce que l'enregistrement voltamétrique résulte du transfert d'électrons dans une réaction pratiquement superficielle entre le matériau électrochimique actif et l'électrolyte (8).

**4.** Dispositif selon la revendication 1, 2 ou 3, caractérisé en ce que deux au moins des électrodes (1, 2) ont une surface comprenant le matériau ou les matériaux électrochimiques actifs.

**5.** Dispositif d'accumulation d'énergie électrique selon l'une quelconque des revendications 1 à 4, caractérisé en ce que le matériau électrochimique actif est un métal, un composé métallique ou un mélange de métaux et/ou de composés.

**6.** Dispositif d'accumulation d'énergie électrique selon l'une quelconque des revendications 1 à 4, caractérisé en ce que le matériau électrochimique actif est un métal, un composé métallique ou un mélange de métaux et/ou de composés dépourvus d'impuretés qui provoquent une action galvanique corrosive qui détériore les électrodes (1, 2).

**7.** Dispositif d'accumulation d'énergie électrique selon l'une quelconque des revendications 1 à 4, caractérisé en ce que le matériau électrochimique actif est composé d'un oxyde ou d'un mélange d'oxydes du même métal ou de métaux différents.

**8.** Dispositif d'accumulation d'énergie électrique selon l'une quelconque des revendications 1 à 4, caractérisé en ce que le matériau électrochimique actif comprend un matériau choisi dans le groupe constitué par les oxydes de ruthénium, de rhodium, de tantale, de cobalt, d'iridium, de molybdène, de nickel, de vanadium et de tungstène, leurs métaux, leurs sulfures, leurs hydrures, leurs nitrures, leurs phosphures, leur séléniures, les sulfures de fer et de plomb et leurs mélanges.

**9.** Dispositif d'accumulation d'énergie électrique selon l'une quelconque des revendications 1 à 4, 7 et 8, caractérisé en ce que le matériau électrochimique est un oxyde mixte de ruthénium avec du tantale et/ou de l'iridium.

**10.** Dispositif d'accumulation d'énergie électrique selon l'une quelconque des revendications 1 à 9, caractérisé en ce que les deux électrodes (1, 2) ont leurs matériaux électrochimiques actifs composés de la même substance.

**11.** Dispositif d'accumulation d'énergie électrique selon l'une quelconque des revendications 1 à 10, caractérisé en ce que le matériau électrochimique actif est revêtu sur l'électrode (1, 2).

**12.** Dispositif d'accumulation d'énergie électrique selon l'une quelconque des revendications 1 à 11, caractérisé en ce que l'électrolyte (8) est un électrolyte liquide, solide ou gazeux (8).

**13.** Dispositif d'accumulation d'énergie électrique selon la revendication 12, caractérisé en ce que l'électrolyte liquide (8) est un électrolyte acide, basique ou neutre, aqueux ou non.

**14.** Dispositif d'accumulation d'énergie électrique selon la revendication 13, caractérisé en ce que l'électrolyte liquide (8) est NaOH, $H_2SO_4$, KOH, KCl, $NaClO_3$, $Na_2SO_4$ ou $K_2SO_4$ ou un sel neutre aqueux de manière générale.

**15.** Dispositif d'accumulation d'énergie électrique selon l'une quelconque des revendications 1 à 14, caractérisé en ce que les électrodes (1, 2) sont séparées par un séparateur (3).

**16.** Dispositif d'accumulation d'énergie électrique selon la revendication 15, caractérisé en ce que le séparateur (3) est choisi dans le groupe qui comprend des membranes à perméabilité ionique, des films de matière plastique hydrophile, du verre, du papier, un feutre et une matière cellulosique.

**17.** Dispositif d'accumulation d'énergie électrique selon l'une quelconque des revendications 1 à 7, caractérisé en ce que des grilles ou toiles collectrices de courant sont utilisées dans les électrodes (1, 2).

**18.** Dispositif selon l'une quelconque des revendications 1 à 17, caractérisé en ce que le matériau électrochimique actif est pseudo-capacitif.

**19.** Dispositif selon l'une quelconque des revendications 1 à 18, caractérisé en ce que le matériau électrochimique actif est réversible cinétiquement.

**20.** Dispositif à résistance électrique différentielle négative caractérisé par les limitations de l'une quelconque des revendications 1 à 19.

**21.** Dispositif électrique de conversion de fréquence, caractérisé par les limitations de l'une quelconque des revendications 1 à 19.

**22.** Dispositif électrique multiplicateur de fréquence, caractérisé par les limitations de l'une quelconque des revendications 1 à 19.

**23.** Dispositif à mémoire d'ordinateur, caractérisé par les limitations de l'une quelconque des revendications 1 à 19.

**24.** Dispositif électrique caractérisé par les limitations de l'une quelconque des revendications 1 à 23, dans lequel un ou plusieurs matériaux particuliers sont adsorbés dans une plage limitée de tensions.

**25.** Dispositif électrique caractérisé par les limitations de l'une quelconque des revendications 1 à 24, dans lequel la porosité de l'électrode (1, 2) est choisie afin qu'elle donne une réactance qui est pratiquement constante dans une plage choisie de fréquences.

**26.** Dispositif selon l'une quelconque des revendications 1 à 25, caractérisé en ce que le matériau actif est un revêtement placé sur une électrode sous-jacente (1, 2).

**27.** Dispositif électrique caractérisé par les limitations de l'une quelconque des revendications 1 à 26, dans lequel le matériau actif, sous forme d'un ou plusieurs métaux ou d'un ou plusieurs composés métalliques, a une pureté d'au moins 99 %.

**28.** Application de l'un quelconque des dispositifs selon l'une quelconque des revendications précédentes à des dispositifs du type des condensateurs, à des dispositifs du type des batteries, à des dispositifs passifs à résistance différentielle négative, à des dispositifs passifs de conversion de fréquence, à des dispositifs multiplicateurs de fréquence, à des dispositifs électrochromes, à des mémoires de traitement de données, à des dispositifs et systèmes de séparation de matériaux gazeux, liquides et solides, et à des dispositifs passifs présentant une réactance constante en fonction de la fréquence.

**29.** Procédé d'accumulation d'énergie électrique dans les dispositifs selon l'une quelconque des revendications précédentes.

**30.** Procédé selon la revendication 29, caractérisé en ce qu'il comprend
(a) la charge du dispositif par l'introduction d'un courant électrique par l'intermédiaire des électrodes (1, 2),
(b) le maintien du potentiel appliqué au dispositif au-dessous de la tension continue de réaction du système utilisé, jusqu'à ce que la charge voulue soit obtenue, et

EP 0 078 404 B1

(c) la décharge de l'énergie électrique emmagasinée dans le système destiné à l'application ou l'utilisation voulue de l'électricité.

31. Procédé selon la revendication 30, caractérisé en ce qu'il comprend la répétition du cycle de charge après la décharge afin que le dispositif soit rechargé pour pouvoir être utilisé de façon continue ou ultérieurement.

32. Procédé selon la revendication 30 ou 31, caractérisé en ce que l'enregistrement voltamétrique a une courbe de charge-décharge sous forme d'"images spéculaires" de hauteur sensiblement variable à différentes tensions, et le dispositif travaille à des niveaux différents de tension afin que la capacité d'accumulation d'énergie électrique soit réglée.

**Patentansprüche**

1. Elektrische Energiespeicherbatterie in der Form einer Einrichtung, die wenigstens eine wiederaufladbare elektrochemische Zelle umfaßt;

wobei die wenigstens eine elektrochemische Zelle wenigstens zwei Elektroden (1, 2), wenigstens einen Elektrolyten (8) und einen Behälter (5) hierfür umfaßt;

wobei wenigstens eine der Elektroden (1, 2) eine Oberfläche hat, die ein aktives elektrochemisches Material umfaßt, welches ein aus Elektronentransfer zwischen dem aktiven elektrochemischen Material und dem wenigstens einen Elektrolyten (8) resultierendes Voltammogramm hat, dessen Aufladungs-/Entladungskurven-Linienzugabschnitte in im wesentlichen "Spiegelbild"-Form sind;

wobei die Batterie in einem Behälter (5) eingeschlossen und fähig ist, ein Spiegelbild-Voltammogramm in ihrem Betriebsbereich zu zeigen.

2. Elektrischer Kondensator in der Form einer elektrochemischen Einrichtung, die wenigstens eine wiederaufladbare elektrochemische Zelle umfaßt;

wobei die wenigstens eine elektrochemische Zelle wenigstens zwei Elektroden (1, 2), wenigstens einen Elektrolyten (8) und einen Behälter (5) hierfür umfaßt;

wobei wenigstens eine der Elektroden (1, 2) eine Oberfläche hat, die ein aktives elektrochemisches Material umfaßt, welches ein aus Elektronentransfer zwischen dem aktiven Material und dem wenigstens einen Elektrolyten (8) resultierendes Voltammogramm hat, dessen Aufladungs-/Entladungskurven-Linienzugabschnitte in im wesentlichen "Spiegelbild"-Form sind;

wobei der Kondensator in einem Behälter (5) eingeschlossen und fähig ist, ein Spiegelbild-Voltammogramm in seinem Betriebsbereich zu zeigen.

3. Einrichtung nach Anspruch 1 oder 2, dadurch **gekennzeichnet,** daß das Voltammogramm aus einem Elektronentransfer in einer wesentlichen Oberflächenreaktion zwischen dem aktiven elektrochemischen Material und dem Elektrolyten (8) resultiert.

4. Einrichtung nach Anspruch 1, 2 oder 3, dadurch **gekennzeichnet,** daß wenigstens zwei der Elektroden (1, 2) eine Oberfläche haben, die das aktive elektrochemische Material bzw. die aktiven elektrochemischen Materialien umfaßt.

5. Elektrische Energiespeichereinrichtung nach irgendeinem der Ansprüche 1 bis 4, dadurch **gekennzeichnet,** daß das aktive elektrochemische Material ein Metall, eine Metallverbindung oder eine Mischung von Metallen und/oder Verbindungen ist.

6. Elektrische Energiespeichereinrichtung nach irgendeinem der Ansprüche 1 bis 4, dadurch **gekennzeichnet,** daß das aktive elektrochemische Material ein Metall, eine Metallverbindung oder eine Mischung von Metallen und/oder Verbindungen ist, die frei von Verunreinigungen sind, welche eine korrosive galvanische Wirkung erzeugen, die die Elektroden (1, 2) verschlechtert.

14

**7.** Elektrische Energiespeichereinrichtung nach irgendeinem der Ansprüche 1 bis 4, dadurch **gekennzeichnet,** daß das aktive elektrochemische Material aus einem Oxid oder einer Mischung von Oxiden der gleichen oder unterschiedlicher Metalle zusammengesetzt ist.

**8.** Elektrische Energiespeichereinrichtung nach irgendeinem der Ansprüche 1 bis 4, dadurch **gekennzeichnet,** daß das aktive elektrochemische Material ein Material aufweist, welches aus der Gruppe ausgewählt ist, die aus den Oxiden von Ruthenium, Rhodium, Tantal, Kobalt, Iridium, Molybdän, Nickel, Vanadium und Wolfram, ihren Metallen, Sulfiden, Hydriden, Nitriden, Phosphiden, Seleniden, den Sulfiden von Eisen und Blei, und Mischungen derselben, besteht.

**9.** Elektrische Energiespeichereinrichtung nach irgendeinem der Ansprüche 1 bis 4, 7 und 8, dadurch **gekennzeichnet,** daß das elektrochemische Material ein Mischoxid von Ruthenium mit Tantal und/oder Iridium ist.

**10.** Elektrische Energiespeichereinrichtung nach irgendeinem der Ansprüche 1 bis 9, dadurch **gekennzeichnet,** daß die aktiven elektrochemischen Materialien von beiden Elektroden (1, 2) aus der gleichen Substanz zusammengesetzt sind.

**11.** Elektrische Energiespeichereinrichtung nach irgendeinem der Ansprüche 1 bis 10, dadurch **gekennzeichnet,** daß die Elektrode (1, 2) mit dem aktiven elektrochemischen Material beschichtet ist.

**12.** Elektrische Energiespeichereinrichtung nach irgendeinem der Ansprüche 1 bis 11, dadurch **gekennzeichnet,** daß der Elektrolyt (8) ein flüssiger, ein fester oder ein gasförmiger Elektrolyt (8) ist.

**13.** Elektrische Energiespeichereinrichtung nach Anspruch 12, dadurch **gekennzeichnet,** daß der flüssige Elektrolyt (8) eine Säure, eine Base oder ein neutraler Elektrolyt, wäßrig oder nichtwäßrig, ist.

**14.** Elektrische Energiespeichereinrichtung nach Anspruch 13, dadurch **gekennzeichnet,** daß der flüssige Elektrolyt (8) NaOH, $H_2SO_4$, KOH, HCl, $NaClO_3$, $Na_2SO_4$ oder $K_2SO_4$ oder generell ein wäßriges neutrales Salz ist.

**15.** Elektrische Energiespeichereinrichtung nach irgendeinem der Ansprüche 1 bis 14, dadurch **gekennzeichnet,** daß die Elektroden (1, 2) mittels eines Trenners (3) getrennt sind.

**16.** Elektrische Energiespeichereinrichtung nach Anspruch 15, dadurch **gekennzeichnet,** daß der Trenner (3) aus der Gruppe ausgewählt ist, die aus ionenpermeablen Membranen, hydrophilen Kunststoffilmen, Glas, Papier, Filz und zellulosischem Material besteht.

**17.** Elektrische Energiespeichereinrichtung nach irgendeinem der Ansprüche 1 bis 16, dadurch **gekennzeichnet,** daß Stromkollektorgitter oder -maschen in den Elektroden (1, 2) angewandt sind.

**18.** Einrichtung nach irgendeinem der Ansprüche 1 bis 17, dadurch **gekennzeichnet,** daß das aktive elektrochemische Material pseudokapazitiv ist.

**19.** Einrichtung nach irgendeinem der Ansprüche 1 bis 18, dadurch **gekennzeichnet,** daß das aktive elektrochemische Material kinetisch reversibel ist.

**20.** Elektrische Negativ-Differentialwiderstandseinrichtung, **gekennzeichnet** durch die Beschränkungen von irgendeinem der Ansprüche 1 bis 19.

**21.** Elektrische Frequenzumwandlungseinrichtung, **gekennzeichnet** durch die Beschränkungen von irgendeinem der Ansprüche 1 bis 19.

**22.** Elektrische Frequenzvervielfachungseinrichtung, **gekennzeichnet** durch die Beschränkungen von irgendeinem der Ansprüche 1 bis 19.

**23.** Computerspeichereinrichtung, **gekennzeichnet** durch die Beschränkungen von irgendeinem der Ansprüche 1 bis 19.

**24.** Elektrische Einrichtung, **gekennzeichnet** durch die Beschränkungen von irgendeinem der Ansprüche 1 bis 23, worin ein spezifisches Material oder spezifische Materialien in einem beschränkten Spannungsbereich adsorbiert werden.

**25.** Elektrische Einrichtung, **gekennzeichnet** durch die Beschränkungen von irgendeinem der Ansprüche 1 bis 24, worin die Porosität der Elektrode (1, 2) so gewählt ist, daß eine Reaktanz erzeugt wird, welche über einen gewählten Frequenzbereich im wesentlichen konstant ist.

**26.** Einrichtung nach irgendeinem der Ansprüche 1 bis 25, dadurch **gekennzeichnet,** daß das aktive Material eine Beschichtung auf einer darunterliegenden Elektrode (1, 2) ist.

**27.** Elektrische Einrichtung, **gekennzeichnet** durch die Beschränkungen von irgendeinem der Ansprüche 1 bis 26, worin das aktive Material, das als Metall(e) oder Metallverbindung(en) vorgesehen ist, eine Reinheit von 99 % oder besser hat.

**28.** Verwendung von irgendeiner der Einrichtungen nach irgendeinem der vorhergehenden Ansprüche in Einrichtungen vom Kondensatortyp, Einrichtungen vom Batterietyp, Passiv-Negativ-Differential-Widerstands-Einrichtungen; Passiv-Frequenzumwandlungs-Einrichtungen; Frequenzvervielfacher-Einrichtungen; elektrochromen Einrichtungen; Datenverarbeitungsspeichern; Gas-, Flüssigkeits- und Feststoffmaterialtrenneinrichtungen und -systemen; und passiven Einrichtungen, die eine konstante Reaktanz gegen die Frequenz zeigen.

**29.** Verfahren zum Speichern von elektrischer Energie in Einrichtungen von irgendeinem der vorhergehenden Ansprüche.

**30.** Verfahren nach Anspruch 29, dadurch **gekennzeichnet,** daß es folgendes umfaßt:
(a) Aufladen der Einrichtung mittels Einführen eines elektrischen Stroms durch die Elektroden (1, 2),
(b) Aufrechterhalten des Potentials auf der Einrichtung unter der Kontinuierlich-Reaktions-Spannung des verwendeten Systems, bis die gewünschte Ladung erhalten wird,
(c) Entladen der gespeicherten elektrischen Energie in dem System, das für die gewünschte Anwendung gestaltet ist, oder Verwendung der Elektrizität.

**31.** Verfahren nach Anspruch 30, dadurch **gekennzeichnet,** daß es das Wiederholen des Aufladezyklus nach der Entladung zum Zwecke der Wiederaufladung der Einrichtung für deren kontinuierlichen oder nachfolgenden Gebrauch umfaßt.

**32.** Verfahren nach Anspruch 30 oder 31, dadurch **gekennzeichnet,** daß das Voltammogramm einen "Spiegelbild"-Aufladungs-/-Entladungs-Linienzug von wesentlich variierender Höhe bei unterschiedlichen Spannungen hat, und daß die Einrichtung bei unterschiedlichen Spannungsniveaus zum Steuern der elektrischen Energiespeicherkapazität betrieben wird.

FIG. 1

FIG. 2

17

*FIG. 3*

*FIG. 4*

18

FIG.5

FIG.6

EP 0 078 404 B1

FIG. 7

FIG.8

FIG.9

FIG.10